# EUROPEAN PATENT SPECIFICATION

(11) **EP 0 790 201 B1**
(45) Date of publication and mention of the grant of the patent: **27.10.1999**
(21) Application number: 97830046.5
(22) Date of filing: 10.02.1997
(51) Int. Cl.: B65G 57/02, B65G 57/06

(54) **High speed panel stacking system**
System zum Stapeln mit hoher Geschwindigkeit für Platten
Système d'empilage à haute vitesse pour panneaux

(30) Priority: 15.02.1996 IT MC960017
(43) Date of publication of application: 20.08.1997
(73) Proprietor: Mobilpref S.p.A., 60100 Ancona (IT); Barbolini, Angelo, Formigini, MO (IT)
(72) Inventor: Pierdicca, Giancarlo, Ancona (IT)
(74) Representative: Baldi, Claudio

(56) References cited:
- EP-A- 0 310 998
- CH-A- 457 515
- DD-A- 233 741
- DE-A- 2 101 241
- DE-A- 2 811 571
- DE-A- 3 136 950
- DE-A- 3 736 868
- US-A- 2 825 475
- US-A- 4 854 815

## Description

This patent application concerns a high-speed panel stacking system.

Companies in the timber sector often have to cut panels to specific sizes and then stack them on conventional pallets for packaging, stocking and transport purposes.

This operation is currently performed by means of automatic stacking machines having a conveyor belt which carries the individual panels to a lifting station, where they are lifted individually by a two-axis mechanical hand - namely a device which translates vertically and horizontally - and which transfers the panels gradually to the pallets to form regular stacks.

The major inconvenience of these conventional stacking systems is their slow operating speed and low production capacity.

Generally in these systems it takes less for a panel to be carried from the conveyor belt to the lifting station than for the mechanical hand to lift the panel from the lifting station, deposit it on the pallet and then return to lift the successive panel.

The different length of these operating stages means that each new incoming panel must be stopped for a certain length of time in the lifting station, until the mechanical hand returns to lift it.

It is obvious moreover that until the lifting station is empty it is not possible for another panel to be placed in the same.

In other words, the slow operating rate of the mechanical hand forces the panel conveyor belt to operate in intermittent stages, with alternating feed and stopping stages.

The purpose of this invention is to realise a stacking system with a faster production rate than conventional systems and in particular eliminate the need for intermittent operation of the conveyor belt.

To achieve this, the system according to the invention has a very different structure with respect to traditional systems.

This special structure which will be better described in the sequel, is necessary to actuate the inventive idea on which this patent application is based; according to this inventive idea the panels are no longer stacked on the pallets on top of one another but in small piles of panels previously formed at the exit of the conveyor belt.

According to this inventive idea, there is no longer a lifting station at the end of the conveyor belt for lifting single panels but a stacking station on which small piles of panels are placed continuously without stopping the feed of the belt.

Said small piles of panels are successively deposited on a special feed track designed to carry them, one by one, into a lifting station positioned within the reach of the mechanical hand which in turn places the same over the pallet in order to form the actual stack.

In particular, the choice of small piles of panels at the exit of the main conveyor belt was decisive in ensuring the high production rate of the stacking system according to the invention.

Thanks to this choice, the system in question has no stopping or dead times; even if its mechanical hand in fact continues to work at the same low speed as before, the time required for the same to complete its operating cycle - namely lifting the panels, depositing them on the pallet and returning to the lifting station - no longer slows down the other operating stations of the system.

The reason for this is that the time required by the mechanical hand to complete the operating cycle is exploited to form the small piles of panels at the exit of the main conveyor belt and to carry the same into the lifting station.

This means that without increasing the operating speed of the mechanical hand it has been possible to increase the speed with which the stack on the pallet is formed and to reduce the number of runs required by the mechanical hand to complete the stack; whereas previously the mechanical hand deposited just one panel for each of its runs, now during each run it deposits a certain number of panels, in other words it deposits a small pile of panels.

Moreover it should be noted that as soon as one of these small piles is formed, the formation of another pile is started automatically without delay, and this, like the previous pile, reaches the lifting station in time to be lifted by the mechanical hand at the start of a new operating cycle.

For major clarity the description of the invention continues with reference to the enclosed drawings which are intended for purposes of illustration and not in a limiting sense where:
- figure 1 is an overall schematic view of the device in question showing the formation of a small pile of panels;
- figure 2 is similar to figure 1 but shows the stage in which the small pile has been completed and is deposited above the device which carries it above the sliding track at the end of which there is the lifting station where the mechanical hand operates.

With reference to the enclosed drawings, it should be noted that the system in question is generally provided with a two axis mechanical hand (1); the system is however also provided with other operating stations which conventional systems do not have.

The first station comprises the device 2 which forms small piles of panels at the exit of the conveyor belt and co-operates with a fork having a horizontal axis 3 which performs alternating vertical runs.

The second station comprises a special feed track positioned under the stacking station, on which the individual piles P are deposited, said piles P being subsequently pushed one by one towards the lifting station where they are secured by the mechanical hand.

More precisely, when the panels reach the end of the main conveyor belt, they are pushed into an opposing pair of tipping side walls 4 each of which supports a series of rollers 4a with horizontal axis on the internal side.

The two opposing series of rollers 4a being provided with a centre to centre distance which is almost identical to the width of the panels; the same are in fact pushed and slide on said rollers 4a until each panel is housed for its full length within the pair of side walls 4.

At this point the side walls 4 are tipped simultaneously outwards thus opening the two opposing series of rollers 4a and allowing the panel, which is no longer supported by the rollers 4a, to fall out.

Each of these panels falls into an underlying conventional stacking device 5 consisting of a pair of chains 5a positioned opposite each other, to which shelves 5b are fixed.

The panels leaving the conveyor belt are in fact intercepted one after the other by the shelves 5b in that the same slide gradually downwards as the number of panels supported increase, by effect of the extra weight.

The shelves slide 5b downwards as a result of the fact that the chains 5a to which they are applied slip by one loop, with respect to the overlying pair of pinions around which each chain rotates.

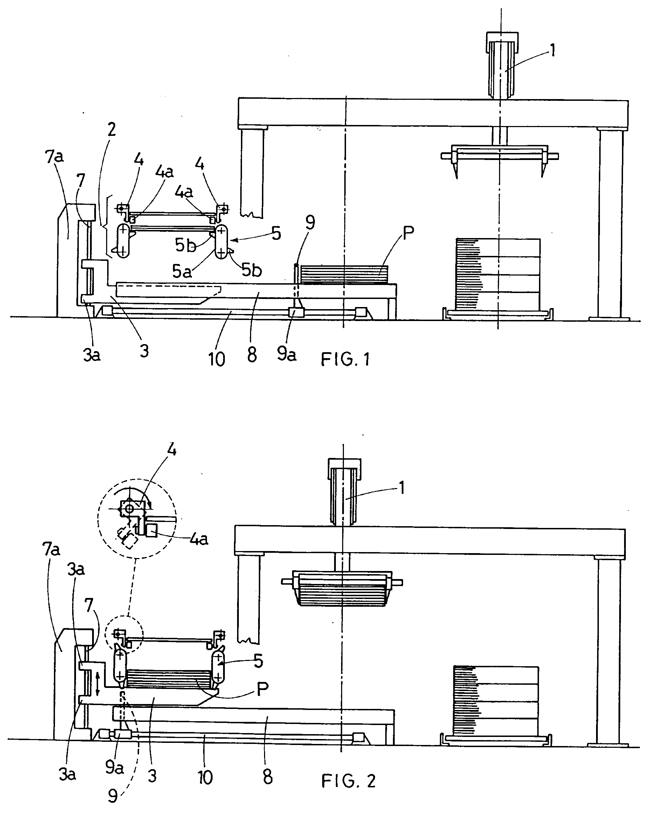

In particular, thanks to said pinions, each chain 5a assumes a position whereby the same has two vertical branches joined by two curves; in the version shown in figure 1, each chain supports two shelves 5b positioned at regular intervals.

It follows that while one shelf 5b loaded with panels moves gradually downwards horizontally along the internal vertical branch in the chain, the other empty shelf moves gradually upwards horizontally along the external vertical branch of the same chain; thanks to this feature the stacking device operates continuously in that it ensures the constant presence of a pair of shelves positioned horizontally under the pair of opening side walls 4, ready to intercept the falling panels and thus ensure the formation of a small stack.

It follows that the centre to centre distance between each shelf 5b of a chain 5a and the corresponding shelf of the opposing chain is slightly less than the width of the panels.

It is evident that when the pair of shelves supporting a stack of panels has terminated its descent along the internal vertical branches of the corresponding chains, they will start to perform the connection curve towards the external vertical branches of the same chains.

During this stage, these shelves will naturally no longer be in horizontal position, thus allowing the panel stack on top of the same (see figure 2) to fall by gravity.

Below said stacking device 5 there is a fork with horizontal axis 3 - identical to those used on fork lifts - provided with rear couplings 3a fitted along a pair of upright bars 7 supported by a suitable bearing structure 7a.

As previously mentioned, said fork 3 performs alternating vertical runs; in particular it can lift until it is close to the stacking device 5 whenever a small stack is being completed in the same.

In this position, the fork 3 - as can be seen in figure 2 - can receive the small stack of panels as soon as this is released by the shelves 5b of the stacking device 5.

The fork 3 then moves downwards again, depositing the small stack on a feed track consisting of a series of horizontal stringers 8.

In order to release the panel stack from the arms of the fork 3 the same must naturally reach, at the end of its bottom run, a level which is lower than that of the stringers 8; in particular it should be noted that at the end of the bottom run, the arms of the fork 3 are at an intermediate position between the stringers 8 of the sliding track.

To move the stack of panels deposited on the stringers 8 forward, it is necessary to actuate a pair of upright rods 9 fitted to corresponding couplings 9a which slide longitudinally within relevant horizontal bars 10 positioned under the stringers 8 in a position intermediate to the same.

The sliding movement of the couplings 9a along the bars 10 - thanks to the use of conventional motor units (not illustrated in the drawings) - ensures that the corresponding rods 9 may follow the sliding track along its entire length, pushing the stack of panels to the end of the run, which corresponds to the lifting station where this stack is grasped by the mechanical hand 1.

Immediately after this action, the couplings 9a move backwards with respect to the bars 10 allowing the vertical rods 9 to return to a position below the stacking device 5 ready to pull a new stack of panels, as soon as the same has been deposited on the feeding track of the fork 3.

## Claims

1. A high-speed panel stacking system of the type consisting of a conveyor belt for carrying the panels and a two-axis mechanical hand (1) for realising large stacks of panels characterised by:
- an opposing pair of side walls (4) opening outwards, positioned at the end of the panel conveyor belt, each of which supports on its internal side its own series of rollers (4a) having horizontal axis; it being provided that said series of rollers (4a) has a centre to centre distance which is almost identical to the width of the panels;
- a device for the formation of panel stacks (P) positioned under the pair of opening side walls (4) and consisting of two chains (5a) supporting shelves (5b); it being provided that said chains (5a) rotate in a closed circuit on respective overlying pairs of pinions with horizontal axes; it being also provided that the downward sliding of said chains around their respective pinions occurs gradually according to the weight loaded on said shelves (5b) and that the centre to centre distance between each shelf (5b) of a chain (5a) and the corresponding shelf of the opposing chain is slightly less than the width of the panels;
- a fork (3) having horizontal axis positioned precisely under said stacking device (5), slidable in alternating vertical direction, guided by two posterior couplings (3a) fitted along a pair of upright bars (7) which are supported by a bearing structure (7a);
- a series of horizontal adjacent stringers (8) positioned at a height above said fork (3) at the end of its bottom run; said stringers (8) extending from the operating station of the fork (3) to a lifting station of the panel stacks (P) where the same are lifted by the mechanical hand (1);
- a pair of upright pusher rods (9) which perform alternating runs in horizontal direction along the spaces between the stringers (8), pulled by corresponding base couplings (9a) sliding longitudinally along respective horizontal bars (10) positioned under said stringers (8) in a position intermediate the same.

## Patentansprüche

1. Hochgeschwindigkeitsstapelungsanlage für Paneele, mit einem Förderband zum Vorschieben der Paneele sowie einer zweiachsigen (1) Vorrichtung zur Schaffung von größeren Paneelenstapeln versehen, wird durch folgendes gekennzeichnet:
- ein Paar entgegengesetzte nach außen spreizbare Seitenarme (4), die am Ende des Förderbandes für die Paneele untergebracht sind und jeweils an der Innenseite einen eigenen Zylindersatz mit waagerechter Achse aufweisen (4a) - wobei man davon ausgeht, daß diese zwei Zylindersätze (4a) eine der Breite der Paneele fast gleiche Zwischenachse aufweisen.
- eine Vorrichtung zur Schaffung kleinerer Paneelenstapel (P), die unterhalb der oben erwähnten spreizbaren Seitenarme (4) untergebracht ist und aus zwei Ketten (5a) zur Festigung jeweils einer kleinen Kragvorrichtung (5b) besteht, welche (5a) um je ein Paar Ritzel mit waagerechter Achse wickeln - wobei davon ausgegangen wird, daß das Gleiten dieser Ketten nach unten um die jeweiligen Ritzel allmählich je nach dem auf die Kragvorrichtungen geladenen Gewicht (5b) erfolgt, sowie davon, daß die Zwischenachse zwischen einer jeden Kragvorrichtung (5b) einer Kette (5a) und der entsprechenden Kragvorrichtung der entgegengesetzten Kette etwas weniger breit als die Paneele selbst ist.
- eine Gabel (3) mit waagerechter Achse, die genau unterhalb der oben erwähnten Stapelungsanlage (5) untergebracht ist und sich abwechselnd senkrecht bewegt, wobei sie durch zwei hinterliegende Manschetten (3a) geführt wird, welche längs eines Paares Strebestangen (7) hineingesteckt sind, die wiederum auf einer tragenden Struktur (7a) stützen.
- einen Satz nebeneinanderliegende waagerechte Gurte (8), die sich auf einer größeren Höhe befinden als derjenigen, wo die oben erwähnte Gabel am Ende jedes unteren Laufes liegt. Diese Gurte (8) dehnen sich von der Betriebsstelle der oben erwähnten Gabel (3) auf die Stelle aus, woher die kleinen Paneelenstapel (P) durch die Vorrichtung (1) mittels einer Zange abgehoben werden.
- ein Paar Strebestangen (9), die sich abwechselnd waagerecht längs der Räume zwischen den oben erwähnten Gurten (8) bewegen, indem sie von jeweiligen Grundmanschetten (9a) gezogen werden. Diese Grundmanschetten gleiten in Längsrichtung längs der jeweiligen waagerechten Stangen (10), die ihrerseits unterhalb der oben erwähnten Gurte (8), an mittleren Stelle zwischen ihnen untergebracht sind.

## Revendications

1. Equipement d'empilage de panneaux à grande vitesse, utilisant un tapis roulant pour l'avance des panneaux et un dispositif de manipulatlon à deux axes (1) pour la réalisation de grosses piles de panneaux, caractérisé par:
- une paire de dossiers opposés (4) qui peuvent s'écarter vers l'extérieur, placée à la fin du tapis roulant transportant les panneaux. Chaque dossier supporte sur le côté intérieur sa propre série de rouleaux (4a) à axe horizontal, qui doivent avoir un entraxe presque identique à la largeur des panneaux;
- un dispositif capable de former de petites piles (P) de panneaux, placé au-dessous de la paire de dossiers (4) et constitué de deux chaînes (5a) de support pour de petites tablettes (5b). Ces chaînes s'enroulent en circuit fermé sur les respectives paires superposées de pignons à axe horizontal, vu que le glissement de ces chaînes vers le bas autour des pignons doit s'effectuer d'une manière progressive en fonction du poids à mesure qu'il est placé sur les petites tablettes (5b). L'entraxe entre chaque tablette (5b) d'une chaîne (5a) et la tablette correspondante de la chaîne opposée doit être un tout petit peu Inférieur à la largeur des panneaux;
- une fourche (3) à axe horizontal, placée exactement au-dessous du dispositif d'empilage (5) et glissant alternativement en ligne verticale, guidée par deux douilles situées derrière (3a), dans lesquelles passe une paire de barres montantes (7) soutenues par une structure portante (7a);
- une série de solives horizontales disposées côte à côte (0), placées à une hauteur supérieure à celle où se trouve la fourche (3) en état de fin de course inférieure. Ces solives (0) s'étendent depuis l'emplacement opérationnel de la fourche (3) jusqu'à l'emplacement de prélèvement des petites piles (P) de panneaux effectué par la pince du dispositif de manipulation (1);
- une paire de tiges montantes (9) capables d'effectuer des courses alternatives en direction horizontale le long des espaces existant entre les solives (8), traînées par les douilles de base respectives (9a) qui glissent longitudinalement le long des barres horizontales (10) placées au-dessous des solives (8), en position intermédiaire par rapport à celles-ci.
